# EUROPEAN PATENT APPLICATION

(11) **EP 3 608 006 A1**
(43) Date of publication of application: **12.02.2020**
(21) Application number: 18188191.3
(22) Date of filing: 09.08.2018
(51) Int. Cl.: B01D 29/21, B01D 46/00, B01D 46/24, B01D 46/52, F02M 35/02, F02M 35/024, F02M 35/022

(54) **A FILTER ELEMENT AND A FILTER SYSTEM FOR ACCOMMODATING A FILTER ELEMENT IN A HOUSING**

(71) Applicant: Mann+Hummel GmbH, 71636 Ludwigsburg (DE)
(72) Inventor: HENCHINAMANE CHANNABASAPPA, Anil Kumar, 577301 Bhadravathi (taluk!) (IN); SATHYANATHAN, Lijith, 560097 Bangalore (IN); SAVANUR RAGHAVENDRA RAO, Srikanth, 560085 Bangalore (IN); ANTOMON, Chowalloor Rapheal, 560088 Bangalore (IN)
(74) Representative: Seyboth, Matthias

(57) **Abstract**

The invention relates to a filter element (10) having a longitudinal axis (L), comprising a filter body (12) being permeable for a fluid, preferably air, and surrounding the longitudinal axis (L). The filter body (12) has two opposing front faces (14, 16), where at least one of the front faces (14, 16) comprises an end cap (18, 20). The filter body (12) comprises a perimeter segment (28) covered by a shield (40), the shield (40) being impermeable for the fluid, wherein perimeter segments (26, 30) being directly exposed to the fluid abut on both sides the covered perimeter segment (28) along the longitudinal axis (L).

The invention further relates to a filter system (100) with an exchangeable filter element (10).

## Description

### Technical Field

The invention relates to a filter element and a filter system for accommodating a filter element in a housing, in particular an air filter system for a combustion engine of a vehicle.

### Prior Art

US 5,730,769 discloses an air filter whose filter insert in a metal-free embodiment can be disposed of without any difficulty and which is compact in construction. The filter insert is supported with a closed end face on the cover of the housing. This supporting takes place via protuberances which lie adjacent the inner wall. In this way a force-keyed connection is achieved and the filter insert is axially secured. A secondary element is arranged inside the center tube. This secondary element has the characteristic of preventing falling dirt, dust or the like from entering the clean air region of the filter when the filter insert is exchanged and of protecting the motor against dust damage when the filter paper of the main cartridge is damaged. The secondary element is not replaced every time the filter insert is exchanged; instead, it is only renewed after several filter exchange cycles. The secondary element is inserted in the center tube and is releasably attached to the center tube via the front end plate. In order that this secondary element is fixed in the installed position, the filter insert, i.e. the main cartridge, is provided with a stop surface which is oriented toward the secondary element and against which the secondary element lies. The side of the stop surface which faces the cover is provided with protuberances which support it with respect to the cover.

EP2851112 B1 discloses a filter element, comprising a filter body made of a zigzag-folded filter bellow with a longitudinal axis, the inner and outer circumferential surface of which is permeable to a medium to be filtered, in particular to air, a first open or closed end disk disposed on one front side and second end disk disposed at the opposite front side. The outer circumferential surface of the filter body features at least on fluid-tight area which is impermeable to the medium to be filtered. The area is formed by an in particular self-supporting inflow protection resting on the outer circumferential surface and/or by a handle protection. The inflow protection and/or the handle protection is formed by a flexible sheet which is applied to the circumferential surface of the filter body and embedded in an end disk at an edge adjacent to the end disk. The edge adjacent to the end disk features openings which are penetrated by the material of the end disk.

### Disclosure of the Invention

It is an object of the invention to provide a filter element for a filter system, in particular for air filter systems of combustion engines, in particular for vehicles, exhibiting a high pre-separation efficiency of the filter system.

It is a further object of the invention to provide a filter system with such a filter element.

One object of the invention is achieved by a filter element having a longitudinal axis, comprising a filter body being permeable for a fluid, preferably air, and surrounding the longitudinal axis, the filter body having two opposing front faces, where at least one of the front faces comprises an end cap, wherein the filter body comprises a perimeter segment covered by a shield, the shield being impermeable for the fluid, wherein perimeter segments being directly exposed to the fluid abut on both sides the covered perimeter segment along the longitudinal axis.

Another object of the invention is achieved by a filter system comprising a housing for accommodating an exchangeable filter element according to any one of the preceding claims, the filter element having a longitudinal axis, the housing comprising a fluid inlet and a fluid outlet, the filter element comprising a filter body being permeable for a fluid, preferably air, and surrounding the longitudinal axis, the filter body having two opposing front faces, where at least one of the front faces comprises an end cap, wherein the filter body comprises a perimeter segment covered by a shield, the shield being impermeable for the fluid, wherein perimeter segments being directly exposed to the fluid entering the housing abut on both sides the covered perimeter segment along the longitudinal axis.

The other claims, the description and the drawings describe advantageous embodiments of the invention.

According to a first aspect of the invention a filter element having a longitudinal axis is proposed, comprising a filter body being permeable for a fluid, preferably air, and surrounding the longitudinal axis. The filter body has two opposing front faces, where at least one of the front faces comprises an end cap. The filter body comprises a perimeter segment covered by a shield, the shield being impermeable for the fluid, wherein perimeter segments being directly exposed to the fluid abut on both sides the covered perimeter segment along the longitudinal axis.

In the proposed filter element for a filter system, the impermeable shield covers the covered perimeter segment as a pre-separation wall. The filter body in this region is not directly exposed to fluid entering the filter system. The shield may be arranged in a middle position along the longitudinal axis of the filter element like a jacket, with a permeable section having slots or holes or the like on another covered perimeter segment adjacent to the pre-separation wall. The filter body in this region is directly exposed to fluid entering the filter system. The fluid may be air. This arrangement may enhance the pre-separation efficiency for air cleaners with a fluid inlet away from the edge of the filter element, as is the case for conventional air cleaners.

This features a favorable design of the filter element, where the pre-separation wall may be positioned at the middle position of the filter element and a further permeable perimeter segment with holes or slots below the pre-separation wall towards a bottom of the filter element.

Favorably in the proposed filter element it may be possible to reduce an initial pressure drop of the incoming fluid. Further it may favorably be possible to improve the pre-separation efficiency for dirt particles in the incoming raw fluid flow. This offers a significant advantage to existing filter elements, where a pre-separation wall normally is arranged at the top or at the bottom of the filter element.

The proposed design of the filter element with the different impermeable and permeable sections on perimeter segments of the filter body gives flexibility to position the pre-separation wall at a middle position along the longitudinal axis of the filter element. Positioning the pre-separation wall like that arranging the permeable section with the slots or holes below the pre-separation wall supports the inventive design of the filter element.

Raw fluid such as air from the fluid inlet of the filter system, hits tangentially on the pre-separation wall of the impermeable perimeter segment being arranged on the filter element for pre-separation of the incoming fluid. The pre-separation wall at a middle position of the filter element and a permeable perimeter segment with slots or holes provided below the pre-separation wall towards the bottom side of the filter element offers the advantage to minimize the initial pressure drop of the incoming fluid. If the raw fluid inlet is at the centre of the filter system, the pre-separation wall may favorably at the middle position along the longitudinal axis of the filter element.

The shield as well as the permeable perimeter segment with the slots or holes may favorably be manufactured as a flexible jacket made out of thin plastic material. Yet advantageously also other materials may be applicable for the impermeable and permeable sections of the perimeter segments.

According to an advantageous embodiment at least a part of the filter body may be arranged in a flow protector, the flow protector comprising the impermeable shield and at least one permeable section where the permeable section abuts on the impermeable shield along the longitudinal axis. Favorably the proposed design of the filter element with the different impermeable and permeable sections on perimeter segments of the filter body gives flexibility to position the pre-separation wall at a middle position along the longitudinal axis of the filter element. Positioning the pre-separation wall like that arranging the permeable section with the slots or holes below the pre-separation wall supports the inventive design of the filter element, which offers the advantage to minimize the initial pressure drop of the incoming fluid.

According to an advantageous embodiment the permeable section may be configured to have at least 50% of its area impermeable for the fluid. By this way the pre-separation efficiency of the filter system may be significantly enhanced, due to separating the dust particles from the incoming fluid flow as e.g. required in an air cleaning system.

According to an advantageous embodiment the permeable section may be configured to have longitudinal slots and ligaments arranged alternatingly along the perimeter of the flow protector. Thus a geometrically well determined permeable section of the flow protector may be achieved which offers the advantage of establishing a favorable fluid flow into the cleaning filter body for the fluid streaming against the permeable section.

According to an advantageous embodiment the ligaments may be embedded in the at least one end cap. Embedding the ligaments in the end cap which may be manufactured by some foam or some mold material ensures a stable mechanical position of the ligaments thus being stable against even high flow pressures of the incoming fluid flow.

According to an advantageous embodiment the flow protector may have a cup-like shape, where the bottom of the cup-like shape is embedded in the end cap. A cup-like shape of the flow protector offers the advantage of placing the filter body inside the cup-like shape thus enabling an easy mounting process of the flow protector to the filter body. Also the flow protector may be fixed in a safe way and the filter element with the flow protector may be easily mounted in the housing of a filter system.

According to an advantageous embodiment the permeable section of the flow protector may extend from its bottom towards the impermeable shield. By this way the impermeable shield may be positioned in a middle position along the longitudinal axis of the filter element and may thus face a fluid inlet of a housing of a filter system when being mounted inside the housing. Thus the flow protector may work in a wanted way because the proposed filter element may be particularly designed for filter systems with a fluid inlet in the middle part of the housing of the filter system.

According to an advantageous embodiment the flow protector may be a molded part. Molding a plastic part is a very efficient way of manufacturing the proposed shape of the flow protector. Flexibility of shaping the flow protector is ensured with relative low costs of production.

According to an advantageous embodiment the impermeable shield may be arranged at a middle portion of the filter body with respect to the longitudinal axis. By this way the impermeable shield may be positioned in a middle position along the longitudinal axis of the filter element and may thus face a fluid inlet of a housing of a filter system when being mounted inside the housing. Thus the flow protector may work in a wanted way because the proposed filter element may be particularly designed for filter systems with a fluid inlet in the middle part of the housing of the filter system.

According to an advantageous embodiment the filter body may be a circular pleated body. Circular pleated bodies are frequently used particularly for air filter elements as favorable efficiency of separating dust particles from the incoming air flow is ensured at considerably low costs of the filter body. Also mechanical stability of the circular pleated filter body is one of the major advantages when using this kind of filter element. Cellulose may favorably be used as filter medium.

According to another aspect of the invention a filter system is proposed, comprising a housing for accommodating an exchangeable filter element according to any one of the preceding claims, the filter element having a longitudinal axis, the housing comprising a fluid inlet and a fluid outlet. The filter element comprises a filter body being permeable for a fluid, preferably air, and surrounding the longitudinal axis. The filter body has two opposing front faces, where at least one of the front faces comprises an end cap. The filter body comprises a perimeter segment covered by a shield, the shield being impermeable for the fluid, wherein perimeter segments being directly exposed to the fluid entering the housing abut on both sides the covered perimeter segment along the longitudinal axis.

In the proposed filter system, the impermeable shield covers the covered perimeter segment as a pre-separation wall. The filter body in this region is not directly exposed to fluid entering the filter system. The shield may be arranged in a middle position along the longitudinal axis of the filter element like a jacket, with an adjacent permeable section having slots or holes or the like on another perimeter segment being arranged. The filter body in this region is directly exposed to fluid entering the filter system. The fluid may be air. This arrangement may enhance the pre-separation efficiency for air cleaners with a fluid inlet away from the edge of the filter element, as is the case for conventional air cleaners.

Favorably in the proposed filter system it may be possible to reduce an initial pressure drop of the incoming fluid. Further it may favorably be possible to improve the pre-separation efficiency for dirt particles in the incoming raw fluid flow. This offers a significant advantage to existing filter systems, where a pre-separation wall normally is arranged at the top or at the bottom of the filter element.

According to an advantageous embodiment the impermeable shield may be arranged at the same axial height of the filter body with respect to the longitudinal axis as the fluid inlet, preferably the shield being arranged to face the fluid inlet. By this way the impermeable shield may be positioned in a middle position along the longitudinal axis of the filter element and may thus face a fluid inlet of a housing of a filter system when being mounted inside the housing. Thus the flow protector may work in a wanted way because the proposed filter element may be particularly designed for filter systems with a fluid inlet in the middle part of the housing of the filter system.

According to an advantageous embodiment the fluid inlet may be arranged to guide the fluid into the housing predominantly tangentially with respect to the perimeter of the filter body. Thus the pre-separation efficiency of the filter system may be favorably enhanced compared to usual filter systems. Also the risk to damage the material of the filter medium by a high inflow fluid pressure may be reduced as there is not a direct perpendicular flow towards the filter medium, but only a tangential flow circularly in the housing of the filter system.

According to an advantageous embodiment the filter system may be configured as a cyclone separator. Favorably the filter system may work as a cyclone separator due to the proposed design of using a central fluid inlet in the housing of the filter system combined with a proposed flow protector around the filter body which enables a circular flow of the incoming fluid flow in the housing of the filter system. Thus a very high pre-separation efficiency of dust particles from the raw incoming fluid flow may be achieved.

According to an advantageous embodiment a secondary element may be arranged inside the filter body. A secondary element inside the filter body, like e.g. a central tube, may stabilized the filter body against high fluid pressure of the incoming fluid streaming through the filter body from an outside of the filter body to an inner side. Besides it may favorably be possible to combine the secondary element with another filter stage and/or provide additional separation of liquid parts of the incoming fluid flow by providing a coalescence stage in the secondary element.

### Brief Description of the Drawings

The present invention together with the above-mentioned and other objects and advantages may best be understood from the following detailed description of the embodiments, but not restricted to the embodiments, wherein is shown in:
- Figure 1: in a sectional view an example embodiment of a filter system according to the invention, with a filter element comprising a flow protector;
- Figure 2: in an enlarged partial sectional view the example embodiment of Figure 1 with design details of the flow protector;
- Figure 3: in an isometric view a filter element according to the invention, with a filter body being arranged partially inside a flow protector;
- Figure 4: in an isometric view the flow protector of Figure 3;
- Figure 5: in top view the flow protector of Figure 3 with a sectional plane A-A marked; and
- Figure 6: in a sectional view the flow protector of Figure 3;
- Figure 7: in an enlarged partial sectional view the bottom side of the flow protector of Figure 3; and
- Figure 8: the flow processes of the proposed design in a sectional view of the filter system.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

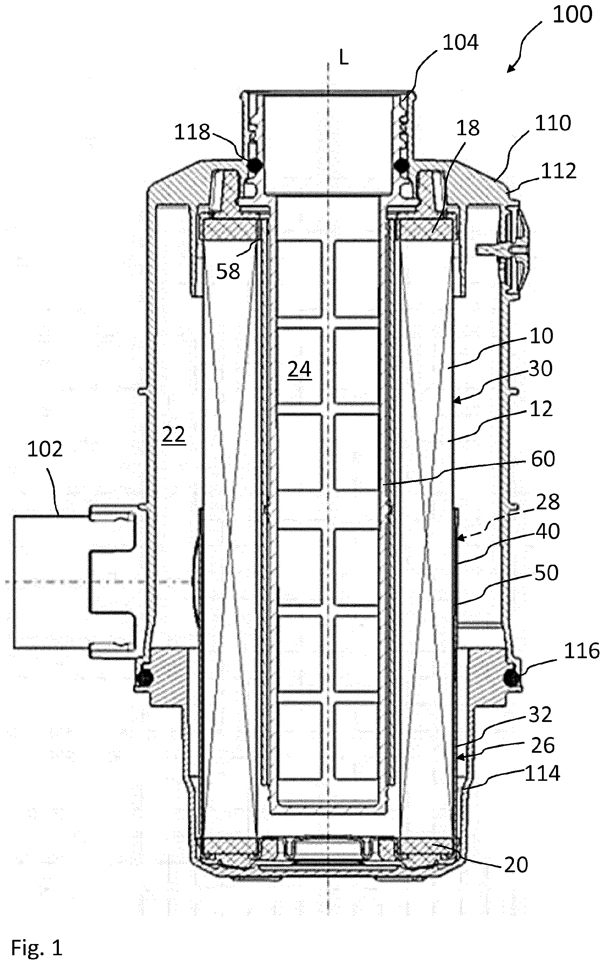

Figure 1 depicts in a sectional view an example embodiment of a filter system 100 according to the invention, with a filter element 10 comprising a flow protector 50. The filter system 100 may favorably be used for an air filter system for a combustion engine of a vehicle.

The filter system 100 comprises a housing 110 with an upper housing part 112 and a lower housing part 114, connected air tightly using a circular gasket 116. The housing 110 accommodates an exchangeable filter element 10, being shaped as a hollow cylinder with a longitudinal axis L. The housing 110 comprises a fluid inlet 102 for raw air and a fluid outlet 104 for the filtered air. The fluid inlet 102 is arranged on a lower part of a side wall of the upper housing part 112, whereas the fluid outlet 114 is positioned in the centre of a frontal side of the upper housing 114 along the longitudinal axis L. Thus the fluid enters the housing 110 of the filter system 100 radially and leaves the housing 110 axially. The fluid enters the filter element 10 radially and leaves upon being filtered by the filter body 12 axially along the longitudinal axis L.

The filter element 10 comprises a filter body 12 being permeable for a fluid, preferably air, and surrounding the longitudinal axis L. The filter body 12 has two opposing front faces 14, 16, which are ended in an end cap 18, 20 each. The lower end cap 20 of the filter body 12 may be a closed disk, whereas the upper end cap 18 exhibits a central opening for the filtered fluid leaving the filter body 12.

The filter body 12 comprises a perimeter segment 28 covered by a shield 40, the shield 40 being impermeable for the fluid and enclosing the filter body 12 on an outer perimeter. The filter body 12 comprises further perimeter segments 26, 30 being directly exposed to the fluid entering the housing 110, which abut on both sides the covered perimeter segment 28 along the longitudinal axis L.

A secondary element 60 is arranged inside the filter body 12 for stabilizing the filter body 12 against high fluid pressure during filtering the incoming fluid. Therefore a central opening 60 is foreseen in the upper end cap 18 of the filter body 12.

The filter element 10 is placed with the inserted secondary element 60 in the housing 110, where the secondary element 60 is sealed in the housing 110 of the filter system 100 at the fluid outlet 104 with a gasket, preferably an O-ring, thus separating a raw fluid side 22 of the filter system 100 against a clean fluid side 24 in an interior of the filter element 10.

Advantageously the filter body 12 may be configured as a circular pleated body.

At least a part of the filter body 12 is arranged in a flow protector 50, wherein the flow protector 50 comprises the impermeable shield 40 and at least one permeable section 32 where the permeable section 32 abuts on the impermeable shield 40 along the longitudinal axis L.

The impermeable shield 40 is arranged at the same axial height of the filter body 12 with respect to the longitudinal axis L as the fluid inlet 102. The impermeable shield 40 thus may be arranged at a middle portion of the filter body 12 with respect to the longitudinal axis L. Preferably the shield 40 is arranged to face the fluid inlet 102 as is the case for the embodiment shown in Figure 1.

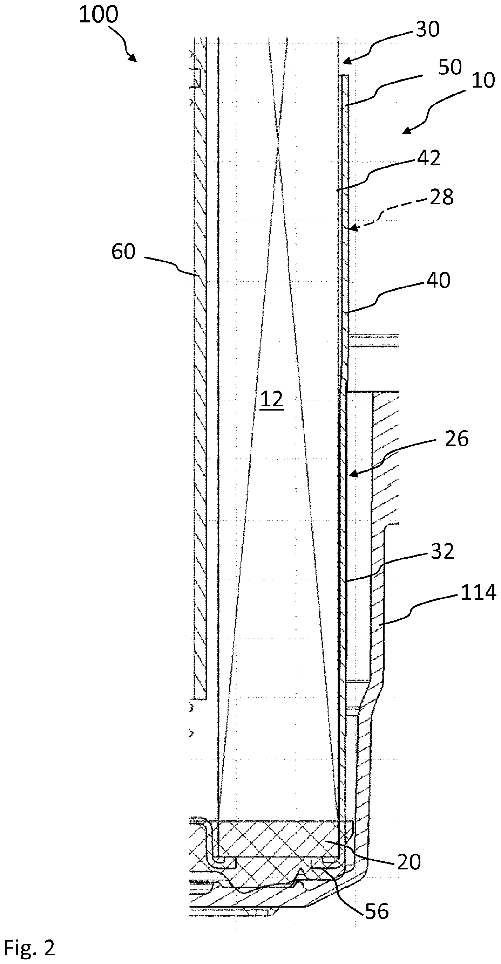

In Figure 2 an enlarged partial sectional view of the example embodiment of Figure 1 with design details of the flow protector 50 is depicted. The impermeable shield 40 of t flow protector 50 is positioned in a middle position of the filter body 12 along the longitudinal axis L of the filter element 10. The permeable section 32 of the flow protector 50, which abuts along the longitudinal axis L the shield 40, extends from its bottom 56 towards the impermeable shield 40. The bottom of the flow protector 50 is embedded in the end cap 20 of the filter body 12. As may be seen from the enlarged section in Figure 2 a slight gap 42 of e.g. 1 mm may be provided between an outer radial surface of the filter body 12 and an inner side of the shield 40. The gap 42 ensures a safe mounting of the flow protector 50 to the filter body 12 when inserting the filter body 12 into the cup-like flow protector 50 without the risk of damaging the filter body 12.

On an inner side of the filter body 12 the secondary element 60 is to be seen.

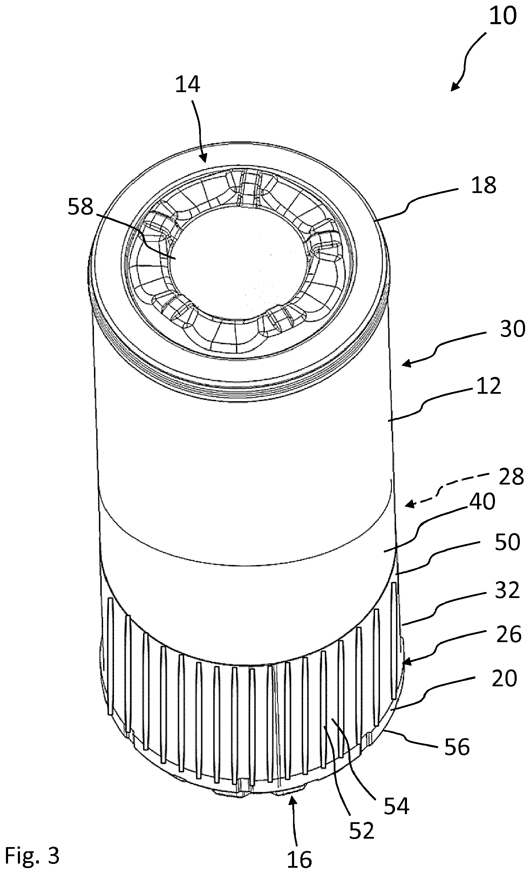

Figure 3 depicts in an isometric view a filter element 10 according to the invention, with a filter body 12 being arranged partially inside a flow protector 50. The filter element 10 is shown from the upper front face 14, where the filter body 12 is ended with the upper end cap 18, exhibiting a central opening 58 for the filtered fluid leaving the interior of the filter body 12.

The filter body 12 is arranged in the flow protector 50 surrounding the filter element 10. The flow protector 50 has a cup-like shape, where the bottom 56 of the cup-like shape is embedded in the lower end cap 20 of the filter body 12. The permeable section 32 of the exposed perimeter segment 26 which abuts to the impermeable shield 40 of the flow protector 50 in the lower part of the filter body 12 is configured to have at least 50% of its area impermeable for the fluid. For this purpose the permeable section 32 is configured to have longitudinal slots 52 and ligaments 54 arranged alternatingly along the perimeter of the flow protector 50. The ligaments 54 are embedded in the lower end cap 20. By this way the flow protector 50 is fixed to the filter element 10.

The exposed perimeter segment 30 abuts the covered perimeter segment 28 of the shield 40 in the upper part of the filter body 12 and is permeable to the fluid for being filtered.

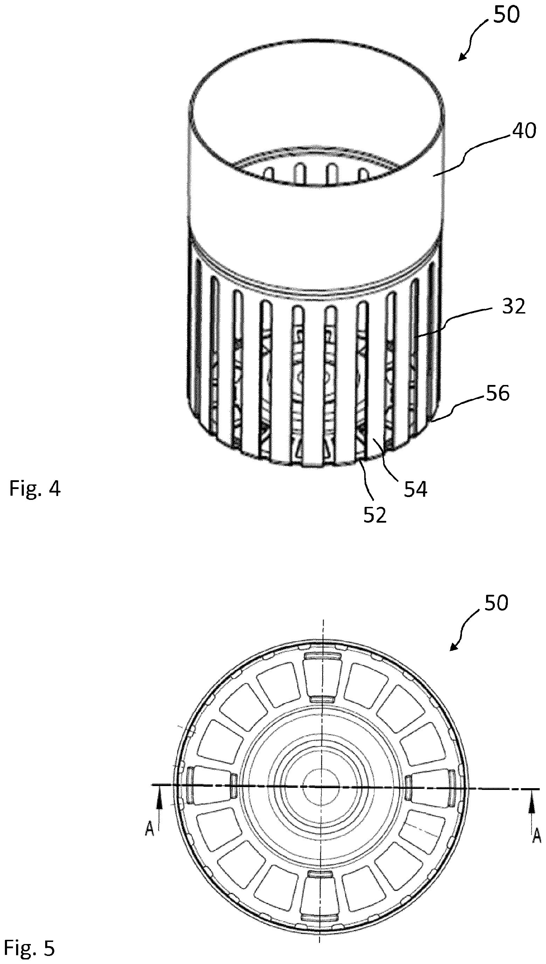

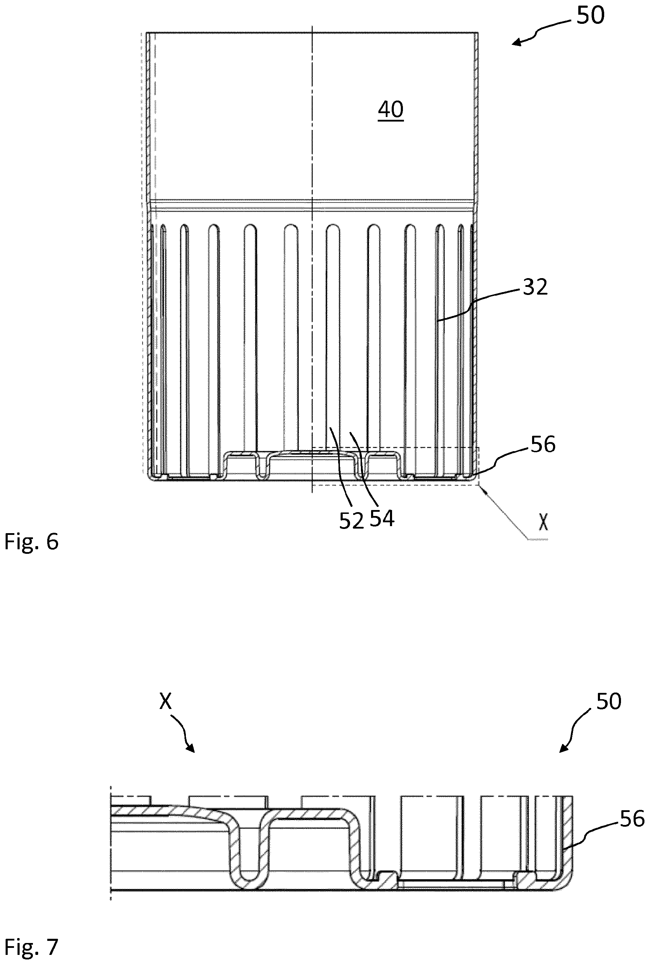

Figure 4 depicts the flow protector 50 of Figure 3 in an isometric view, whereas in Figure 5 a top view of the flow protector 50 with a sectional plane A-A marked and in Figure 6 a sectional view of the flow protector 50 along the sectional plane A-A is shown.

The cup-like shape of the flow protector 50, which may be molded from some plastics material exhibits in an upper part the impermeable shield 40 which abuts to the permeable section 32 with the axial slots 52 and ligaments 54. For clarity only one slot 52 and one ligament 54 is referenced by a reference sign. The cup-like shape of the flow protector 50 is ended with a mainly flat bottom 56 which also exhibits some openings in the geometrical structure of the bottom 56.

Figure 7 depicts in an enlarged partial sectional view X the bottom side of the flow protector 50. The bottom 56 exhibits a step-shape structure which ensures an efficient connection to the end cap 20 (see Figure 2) of the filter body 12. The material of the end cap 20 being preferentially a foamed part connects in a favorable way to the step-shaped structure of the bottom 56 of the flow protector.

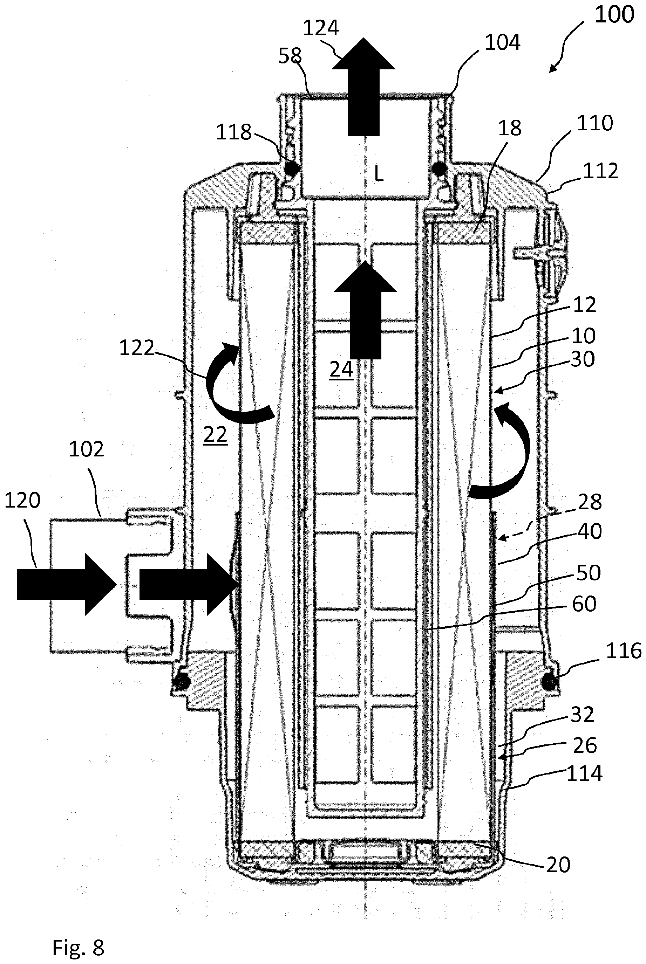

In Figure 8 the flow processes of the proposed design is depicted in a sectional view of the filter system 100. As may be seen from Figure 8 the fluid inlet 102 of the embodiment of the filter system 100 is arranged to guide the fluid into the housing 110 predominantly tangentially with respect to the perimeter of the filter body 12. The incoming raw fluid flow is marked by the black bold arrow 120. The incoming fluid 120 from the fluid inlet 102 hits tangentially on the shield 40 of the flow protector 50 functioning as a pre-separation wall. The shield 40 thus provides the filter body 12 to be damaged by the high pressure incoming fluid 120 which may even transport dust particles with the risk of possibly damaging the relatively sensible filter body 12 by high impact velocities. Dust particles thus may be separated from the fluid stream and may sink down by gravitation and be collected at the lower end in the housing 110 of the filter system 100.

The fluid further rotates in the raw fluid side 22 of the housing 110 around the filter element 10, marked by the black arrow 122. By this way the filter system may be configured as a cyclone separator. Dust particles may additionally be collected at the inner side of the outer wall of the housing 110 by centrifugal force and finally also be collected at the bottom of the housing 110.

The fluid finally flows radially through the filter body 12 and is filtered on the way to the interior of the filter element 10. The fluid then may leave the clean fluid side 24 of the filter system 100 through the opening of the filter element 58, marked by the arrow 124.

## Claims

1. A filter element (10) having a longitudinal axis (L),
comprising a filter body (12) being permeable for a fluid, preferably air, and surrounding the longitudinal axis (L),
the filter body (12) having two opposing front faces (14, 16), where at least one of the front faces (14, 16) comprises an end cap (18, 20),
wherein the filter body (12) comprises a perimeter segment (28) covered by a shield (40), the shield (40) being impermeable for the fluid, wherein perimeter segments (26, 30) being directly exposed to the fluid abut on both sides the covered perimeter segment (28) along the longitudinal axis (L).

2. The filter element according to claim 1, wherein at least a part of the filter body (12) is arranged in a flow protector (50), the flow protector (50) comprising the impermeable shield (40) and at least one permeable section (32) where the permeable section (32) abuts on the impermeable shield (40) along the longitudinal axis (L).

3. The filter element according to claim 2, wherein the permeable section (32) is configured to have at least 50% of its area impermeable for the fluid.

4. The filter element according to claim 2 or 3, wherein the permeable section (32) is configured to have longitudinal slots (52) and ligaments (54) arranged alternatingly along the perimeter of the flow protector (50).

5. The filter element according to claim 4, wherein the ligaments (54) are embedded in the at least one end cap (18, 20).

6. The filter element according to anyone of the claims 2 to 5, wherein the flow protector (50) has a cup-like shape, where the bottom (56) of the cup-like shape is embedded in the end cap (18, 20).

7. The filter element according to claim 6, wherein the permeable section (32) of the flow protector (50) extends from its bottom (56) towards the impermeable shield (40).

8. The filter element according to anyone of the claims 2 to 7, wherein the flow protector (50) is a molded part.

9. The filter element according to anyone of the preceding claims, wherein the impermeable shield (40) is arranged at a middle portion of the filter body (12) with respect to the longitudinal axis (L).

10. The filter element according to anyone of the preceding claims, wherein the filter body (12) is a circular pleated body.

11. A filter system (100) comprising a housing (110) for accommodating an exchangeable filter element (10) according to any one of the preceding claims, the filter element (10) having a longitudinal axis (L), the housing (110) comprising a fluid inlet (102) and a fluid outlet (104),
the filter element (10) comprising a filter body (12) being permeable for a fluid, preferably air, and surrounding the longitudinal axis (L),
the filter body (12) having two opposing front faces (14, 16), where at least one of the front faces (14, 16) comprises an end cap (18, 20),
wherein the filter body (12) comprises a perimeter segment (28) covered by a shield (40), the shield (40) being impermeable for the fluid,
wherein perimeter segments (26, 30) being directly exposed to the fluid entering the housing (110) abut on both sides the covered perimeter segment (28) along the longitudinal axis (L).

12. The filter system according to claim 11, wherein the impermeable shield (40) is arranged at the same axial height of the filter body (12) with respect to the longitudinal axis (L) as the fluid inlet (102), preferably the shield (40) being arranged to face the fluid inlet (102).

13. The filter system according to claim 11 or 12, wherein the fluid inlet (102) is arranged to guide the fluid into the housing (110) predominantly tangentially with respect to the perimeter of the filter body (12).

14. The filter system according to any one of the claims 11 to 13, being configured as a cyclone separator.

15. The filter system according to any one of the claims 11 to 14, wherein a secondary element (60) is arranged inside the filter body (12).
